# EUROPEAN PATENT SPECIFICATION

(11) **EP 1 799 611 B1**
(45) Date of publication and mention of the grant of the patent: **18.03.2009**
(21) Application number: 05773158.0
(22) Date of filing: 03.08.2005
(51) Int. Cl.: B67D 5/37, B67D 5/372, B67D 5/373, B67D 5/377, B60K 15/04

(54) **IMPROVED FUEL FILLING APPARATUS**
VERBESSERTE KRAFTSTOFFBETANKVORRICHTUNG
APPAREIL DE REMPLISSAGE DE CARBURANT AMELIORE

(30) Priority: 03.08.2004 GB 0417258; 13.07.2005 GB 0514346
(43) Date of publication of application: 27.06.2007
(60) Divisional application: 08169371.5
(73) Proprietor: Solution Specialists Limited, 4 Fyne Avenue Righead Bellshill, Lanarkshire ML4 3LJ (GB)
(72) Inventor: MCGEE, Graham, Bellshill, Lanarkshire ML4 3LJ (GB)
(74) Representative: Fulton, David James
(86) International application number: PCT/GB2005/003047
(87) International publication number: WO 2006/013364

(56) References cited:
- EP-A- 0 487 844
- EP-A- 0 718 140
- EP-A- 1 325 830
- WO-A-01/40105
- US-A- 5 755 256

## Description

The present invention relates to the field of fuelling apparatus for motor vehicles and in particular to an improved fuel filling apparatus suitable for use in the refuelling of commercial motor vehicles.

Refuelling of motor vehicles is a major problem faced by operators of large fleets of commercial vehicles such as bus companies and HGV operators, as is appreciated by those skilled in the art. The vast majority of these vehicles are diesel operated and refuelling is typically done at depots overnight by fuelling operators. Over and above the obvious inconvenience, the penalties incurred by public transport operators if a vehicle runs out of fuel on the road are severe. As a result the most common approach to the refuelling of these vehicles is through a "fill to spill" policy in order to ensure that the fuel tank is filled to capacity.

This policy causes a considerable spillage problem. The alternative requires the fuelling operators to stop filling so as to observe whether or not there is a fuel presence in the neck of the tank. This method of filling causes a considerable wasted time period for each vehicle filled. A direct result of the above methods is that fuel spillage constitutes a major waste of fuel and therefore money.

In relation to commercial bus operators, the design of fuel tanks often exacerbates the effects of foaming of the fuel during the filling process. This foaming generally acts to further increase the level of fuel spillage that occurs.

Fuel spillage is also a health, safety and environmental hazard that can result in severe penalties for any occupational or environmental damage caused. It is known to those skilled in the art that prolonged exposure of fuel to human skin can result in harmful effects. Indeed studies have shown a greater incidence of various type of cancer in mice on repeated exposure to diesel fuel. The level of diesel spillage that exists in depot fuelling areas can also lead to an excessively slippery ground surface. This creates an obvious hazard for the safety of the fuelling operators.

The above detrimental effects highlight the obvious benefit in being able to reduce the level of fuel spillage wherever possible.

Further technical problems experienced by commercial vehicle operators employing the present design of fuel filling apparatus results from the fact that the equipment used in many operator's sites is identical to that used on garage retail forecourts. Generally this equipment is unfit for the harsh industrial environment in which it must operate. As a result the level of damage sustained by the equipment during operation is generally unacceptable for the purpose of large scale vehicle refuelling.

A yet further problem particularly associated with diesel vehicle refuelling systems is that the fuel nozzles described in the prior art principally exhibit the same basic operating principals that were originally designed for use with petrol fuelling systems. This leads to further problematic features in relation to the automatic cut off systems used. Often the automatic cut off systems employed within petrol based filling systems are unsuitable for use with diesel systems as the foaming nature of the diesel during filling causes the nozzle cut off to be activated before the fuel tank is full.

Sabotage, damage to fuel tanks and siphoning are also common problems experienced by commercial vehicle operators. It is known for paper towels, sugar, latex gloves and the like, or siphoning apparatus to be inserted via the filler necks into the fuel tanks so resulting in either damage to the engine of the vehicles or theft of a vehicle's fuel. Therefore, it is of obvious advantage to a commercial vehicle operator if the fuel filling apparatus could also act to assist in reducing the potential for sabotage of, or fuel siphoning from, the vehicle's fuel tank.

European patent publication No. 1 325 830, in the name Mougenot, describes an antitheft and overflow protection nozzle suitable for use with a fuel tank which attempts to overcome, or at least mitigate some of the above described problems. The disclosed features comprise the preamble of claim 1.

### Summary of Invention

According to a first aspect of the present invention there is provided a shut off unit suitable for use with fuel supply apparatus, the shut off unit comprising a bore suitable for locating with a fuel supply apparatus bore, at least one fuel flow aperture that provides a means for the fuel to exit the bore, and a float, characterised in that the shut-off unit further comprises a collar that is attached to the float, wherein when the float is located within fuel that has exited from the bore the float acts to move the collar so as to block the at least one fuel flow aperture.

Preferably the at least one fuel flow aperture is arranged to provide an off-axis fuel flow from the bore.

Optionally the shut off unit further comprises a float guide rod that connects the float and the collar to the bore wherein the float guide rod acts to assist the movement of the collar so as to block the at least one fuel flow aperture.

According to a second aspect of the present invention there is provided a fuel filling receiver assembly suitable for locating within a filler neck of a fuel tank, said fuel filling receiver assembly comprising a receiver bore and one or more first vents located externally to the receiver bore wherein the receiver bore provides a means for directing a fuel into the fuel tank while the one or more first vents provide an exhaust means for one or more gases located within the fuel tank wherein the fuel filling receiver assembly further comprises a shut-off unit in accordance with the first aspect of the present invention.

The above arrangement allows for fuel to be diverted from the receiver bore into a discrete chamber formed between the bore and the inner surface of the collar. As the volume of the fuel increases within this chamber the associated pressure within this chamber also increases.
This increased pressure assists the collar in being drawn along the float guide rod so as to be in a position to prevent the flow of fuel through fuel flow apertures.

Most preferably the receiver bore comprises a length greater than the filler neck of the fuel tank so that turbulence experienced by the fuel entering the fuel tank is reduced.

Optionally the receiver bore further comprises a flexible hose section.

Preferably the fuel filling receiver assembly further comprises a vent cover that moves between a first position that closes the one or more first vents and a second position that opens the one or more first vents.

Most preferably the vent cover is resiliently biased to the first position by one or more bias means.

Preferably the vent cover comprises one or more second vents that provide a second exhaust means for the one or more gases located within the fuel tank.

Preferably the one or more first vents provide a substantially radial exhaust means for the fuel filling receiver assembly. The one or more second vents provide a substantially axial exhaust means for the fuel filling receiver assembly.

Preferably the fuel filling receiver assembly further comprises an entrance valve that moves between a first position that closes one end of the receiver bore and a second position that opens said end of the receiver bore.

Most preferably the entrance valve is resiliently biased to the first position by one or more bias means.

Preferably the fuel filling receiver assembly further comprises a receiver coupling component that provides a means for securing a fuel filling nozzle assembly to the receiver assembly.

Preferably the receiver coupling component comprises one or more radially extending protrusions located on the external surface of the receiver bore.

Preferably the fuel filling receiver assembly further comprises an attachment means for securing the receiver assembly to the filler neck of the fuel tank.

Optionally the attachment means for securing the receiver assembly comprises a thread fitting.

### Brief description of drawings

Aspects and advantages of the present invention will become apparent upon reading the following detailed description and upon reference to the following drawings in which:
- Figure 1:: presents a perspective view of a fuel filling apparatus in accordance with an aspect of the present invention;
- Figure 2:: presents:
a) a perspective view;
b) a cross sectional perspective view;
c) a cross sectional front view with a vent ring in a closed position; and
d) a cross sectional front view with the vent ring in an open position;
of a receiver assembly of the fuel filling apparatus of Figure 1;
- Figure 3:: presents a perspective view of a nozzle assembly of the fuel filling apparatus of Figure 1;
- Figure 4:: presents a cross sectional front view of the fuel filling apparatus of Figure 1;
- Figure 5: presents a schematic representation of the fuel filling apparatus of Figure 1 in situ with a fuel tank;
- Figure 6: presents a cross sectional front view of the coupling mechanism of the fuel filling apparatus of Figure 1;
- Figure 7: presents a cross sectional perspective view of an automatic cut off employed within the fuel filling apparatus of Figure 1;
- Figure 8: presents further detail of the automatic cut off of Figure 7 in the form of a cross sectional front view of interface between the nozzle assembly and the receiver assembly;
- Figure 9: presents a schematic representation of the automatic cut off employed within the fuel filling apparatus of Figure 1;
- Figure 10: presents a schematic representation of an alternative automatic cut off employed within the fuel filling apparatus;
- Figure 11: presents a schematic representation of the receiver assembly adapted for operation with an alternative automatic cut off;

- Figure 12: presents a cross sectional representation of a shut off unit as employed in the alternative receiver assembly, in an open position; and
- Figure 13: presents a cross sectional representation of a shut off unit as employed in the alternative receiver assembly, in a closed position.

### Specific Description

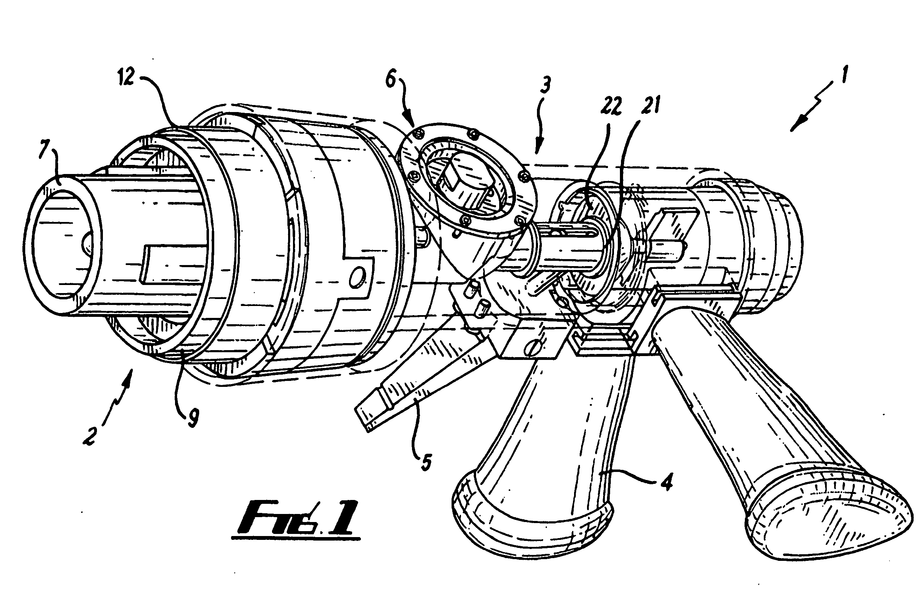

Referring initially to Figure 1 a perspective view of a fuel filling apparatus 1 is presented in accordance with an aspect of the present invention. The fuel filling apparatus 1 can be seen to comprise a receiver assembly 2 and a nozzle assembly 3 that couple together (as described below). The nozzle assembly 3 can be seen to comprise two handles 4 that aid the deployment of the apparatus 1 by a user. A trigger 5 provides a mechanism for activating the apparatus 1 so as to allow fuel to be supplied from a pump to a fuel tank, as appropriate. An automatic cut off mechanism apparatus 6 is also present so as to provide a means for automatically stopping the supply of fuel to a tank when the tank has been filled. Further detail of the automatic cut off mechanism 6 is provided below.

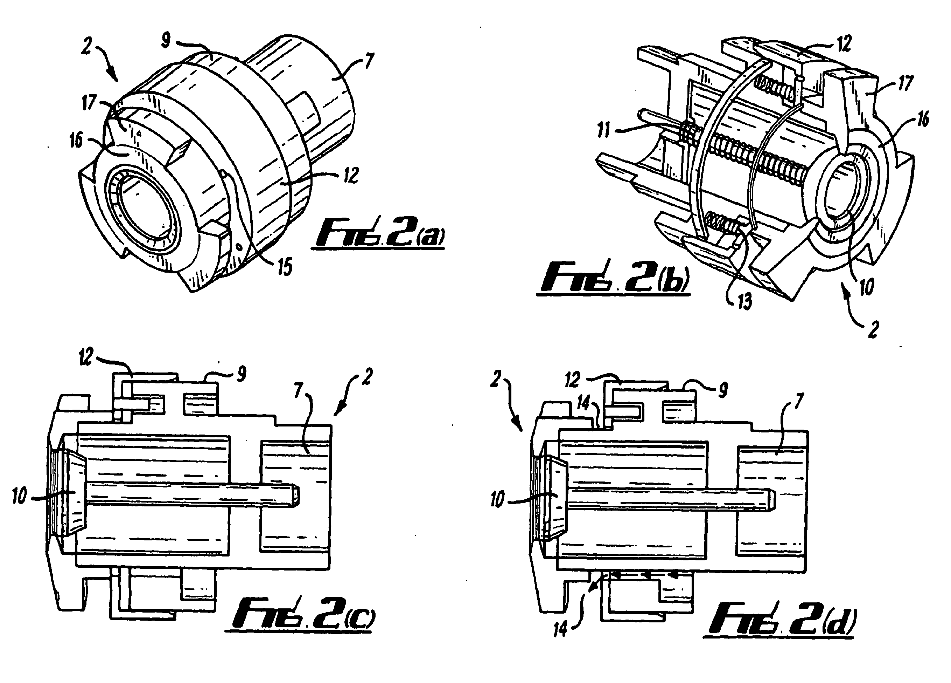

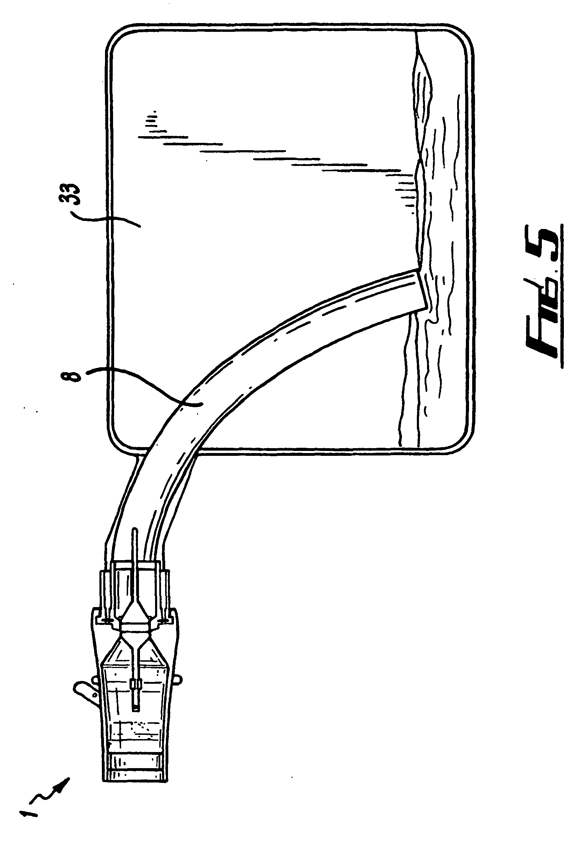

Turning now to Figure 2 further detail of the receiver assembly 2 can be seen from the various views presented. The receiver assembly 2 comprises a central receiver bore 7 attached to one end of which is a fuel delivery hose 8. For clarity purposes the fuel delivery hose 8 is not included in Figure 2 but can be seen with reference to Figure 5, that is discussed in further detail below.

On the external surface of the central receiver bore 7 is provided a threaded fitting 9 that allows the receiver assembly 2 to be fitted to a filler neck of a vehicle's fuel tank. This is simply achieved by first removing an existing filler cap and then screwing the threaded fitting 9 into the neck of the vehicle fuel tank. Thus, the receiver assembly 2 is fitted to the vehicle's fuel tank without any requirement to modify the tank.

At the opposite end of the central receiver bore 7 is located a receive poppet valve 10 that is biased by a receiver poppet valve spring 11 so as to provide the required sealing for the receiver assembly when not in use. The biased receiver poppet valve 10 also reduces the risk of sabotage of a vehicle's fuel tank since the first spring 11 helps prevent unauthorised access by a foreign body.

Also located at receiver poppet valve 10 end of the central receiver bore 7 is a vent cover 12 that is biased towards a closed position by the presence of vent cover springs 13, as shown in Figure 2(c). When an axial force is supplied to the vent cover 12, so as to overcome the bias force of the vent cover springs 13, the vent cover moves from the closed position of Figure 2(c) to the open position of Figure 2(d). In this open position a plurality of radial vents 14 provide a means for air contained within a fuel tank being filled to vent to the surrounding environment (as discussed in further detail below).

On the front face of the vent cover 12 are located a plurality of axial vents 15. These axial vents 15 provide a means for air to move axially through the receiver assembly 2.

Located on a front face of the receiver assembly 2 is a receiver coupling component 16 that comprises three "cam type" protrusions 17. The receiver coupling provide part of the coupling means by which the receiver assembly 2 can be attached to the nozzle assembly 3, as described in further detail below.

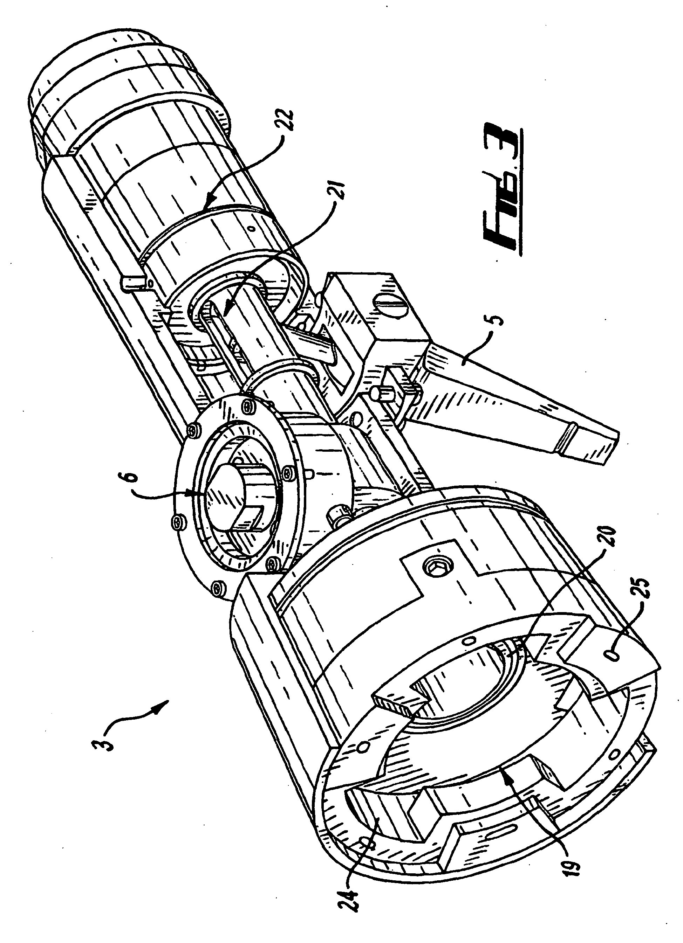

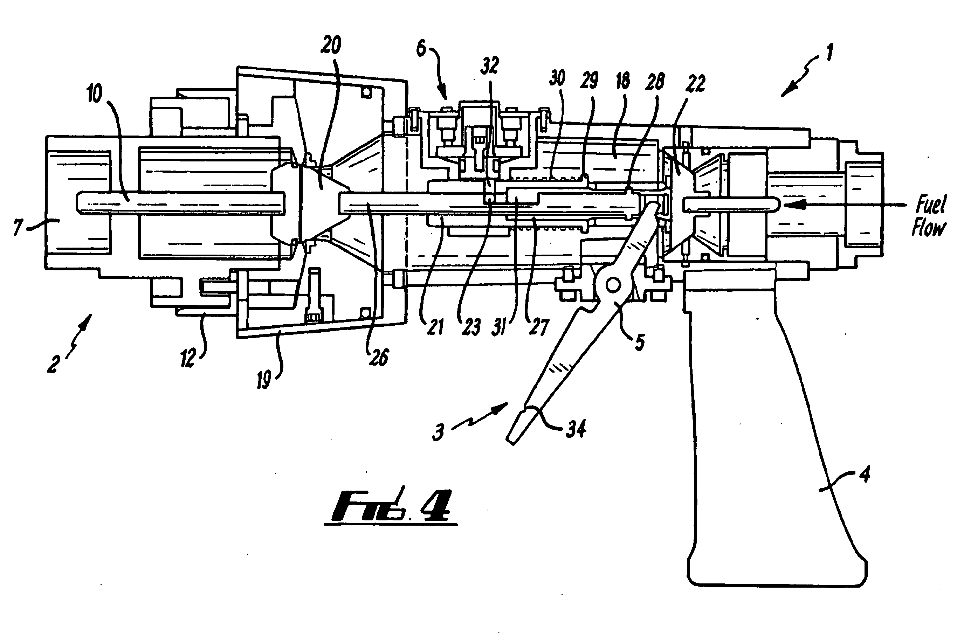

Further detail of the nozzle assembly 3 can be seen from Figure 3 and 4 which present a perspective view of the nozzle assembly 3 and a cross sectional front view of the fuel filling apparatus 1, respectively. The nozzle assembly 3 can be seen to comprise a central nozzle bore 18. Starting at one end of the central nozzle bore 18 the nozzle assembly 3 can be seen to further comprise a nozzle coupling component 19, a first poppet valve 20, a bolt assembly 21 that runs coaxially along the length of the central nozzle bore 18 and a second poppet valve 22. Located between the first 20 and second poppet valves 22 is a latch 23 that couples the bolt assembly 21 to the automatic cut off mechanism 6

Located on the nozzle coupling component 19 are three coupling apertures 24 suitable for receiving a cam type protrusions 17 of the receiver coupling component 16. A plurality of vents 25 are also present within the nozzle coupling component 19. These axial vents 25 provide a means for air to move axially through the nozzle coupling component 19 for use by the automatic cut off mechanism 6, as described in detail below.

The bolt assembly itself comprises an inner bolt 26 and an outer bolt 27 that can move relative to each other in a telescopic manner. A ring 28 located on the outer surface of the inner bolt 26 interacts with lip 29 on the outer bolt 27 so as to prevent the inner bolt 26 becoming separated from the outer bolt 27. The inner bolt 26 is connected directly at one end to the first poppet valve 20 and to the trigger 5 at the opposite end. The outer bolt 27 is arranged to communicate directly at one end to the second poppet valve 22 and is biased by a bolt assembly spring 30 so as to maintain the second poppet valve 22 in a closed position. An axial slot 31 is located within the inner bolt 26 while there is also located a radial slot 32 in the outer bolt 27.

The latch 23 is coupled to the automatic cut off mechanism 6 and interacts with the inner bolt 26 and the outer bolt 27 via the axial slot 31 and the radial slot 32, respectively. It is the latch 23, in combination with the trigger 5 and the bolt assembly 21 that provides a control means for opening and closing the second poppet valves 22, as described below.

Figure 5 presents a schematic representation of the fuel filling apparatus 1 when deployed to fill a fuel tank 33 with diesel. The first stage of the operation involves the receiver assembly 2 being attached to the filler neck of the fuels tank 33.

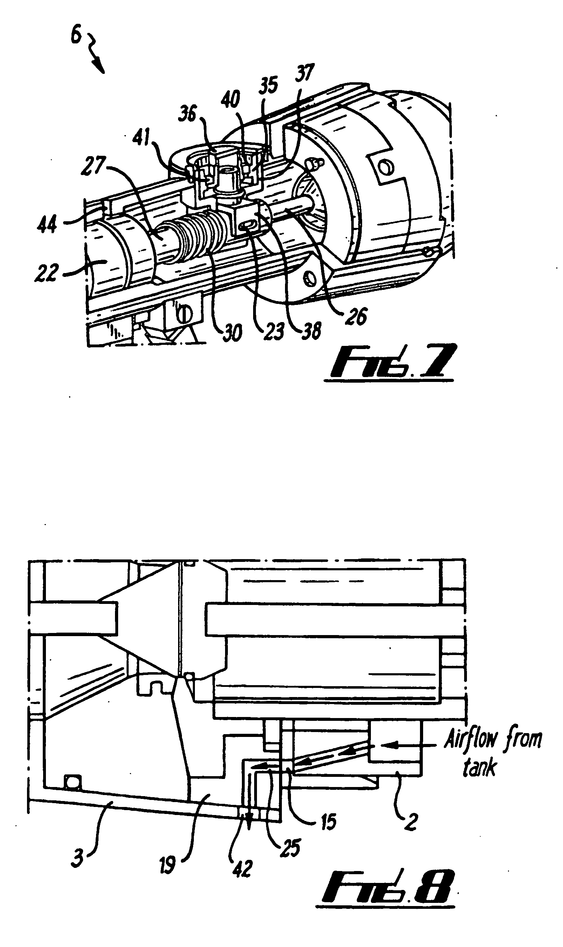

Next the nozzle assembly 3 is coupled to the receiver assembly 2 by aligning the coupling apertures 24 with the cam type protrusions 17 of the receiver coupling component 16, as depicted schematically in Figure 7. An axial pressure is then applied to the nozzle assembly 3 so as to overcome the bias force of the vent cover springs 13 so as to move the vent cover 12 from the closed position to the open position. Once the cam type protrusions 17 have move passed through the coupling apertures 24 the nozzle assembly is rotated by 60º so as to turn and lock the nozzle assembly 3 in position with the receiver assembly 2, as presented in Figure 1.

This turning motion acts to engage the angled mating faces located on the receiver 16 and nozzle coupling components 19 with the result that the nozzle assembly 3 is pulled further in towards the receiver assembly 2, with the rotational movement provided by the user. Thus the rotational movement has the effect of generating a linear movement of the nozzle assembly 3 relative to the receiver assembly 2. This linear movement acts to move the vent cover 12 to the open position while locating the first poppet valve 20 with the receiver poppet valve 10 ready for fuelling. The coupling components, 16 and 19, also ensure that the nozzle assembly 3 can not experience any further rotation than is necessary for the correct operation of the apparatus 1.

Once the nozzle assembly 3 is coupled securely with the receiver assembly 2 the next stage is for the operator to depress the trigger 5. The manual application of a force to the trigger 5 causes it to rotate 55º about the connection point with the inner bolt 26. A clip attached to the operator handle 4 can then be located within a clip recess 34 located on the trigger 5 so as to fix the position of the trigger 5.

Rotation of the trigger 5 transmits a linear force to the inner bolt 26 of the bolt assembly 21. This linear force causes the inner bolt 26 to move relative to the outer bolt 27 so as to open the first poppet valve 20. As the first poppet valve 20 is now in direct communication with the receiver poppet valve 10 the bias force provided by the receiver poppet valve spring 11 is overcome resulting in the opening of the receiver poppet valve 10.

As the inner bolt 26 is further linearly translated by the rotational movement of the trigger 5 the advancing face of the axial slot 31 on the inner bolt 26 makes physical contact with the latch 23. The latch 23 then transmits the linear force experienced by the inner bolt 26 to the outer bolt 27. This causes the whole bolt assembly 21 to be translated axially so that the outer bolt provides a force to overcome the bolt assembly spring 30. The overall result is that the second poppet valve 22 also moves from the closed position to an open position.

It should be noted that the second poppet valve 22 is opened only by the linear distance moved during the second phase of movement of the bolt assembly 21 i.e. the linear translation corresponding to the movement of the outer bolt 27 only. It is during this second phase of movement that the fuel begins to flow as the second poppet valve 22 provides a check to the fuel flow from the fuel pump. Thus, at this stage fuel is free to be pumped through the fuel filling apparatus 1 so as to fill the fuel tank 33 with diesel.

As the level of fuel within the tank 33 rises the fuel acts to dispel the air and vapour mixture that originally filled the empty tank 33. As a result the air and vapour mixture is able to vent to the surrounding atmosphere by moving along the external surface of the fuel delivery hose 8 to the radial vents 14 located on the external surface of the receiver assembly 2. Due to the fact that the fuel enters into the tank 33 through a sealed delivery system the expelled air and vapour mixture encounters no obstructing fuel flow as it vents and so allows for greater flow rates to be achieved. Thus the fuel filling apparatus 1 allows for faster fuelling operations to take place then for those systems already known in the art.

A further technical advantage of the radial vents 14 is that they also provide a means for eliminating the risk of the fuel tank 33 becoming pressurised during the fill operation. Pressurisation of the fuel tank is known to result in damage to the tank and so corresponding potential health and safety hazards to the operator.

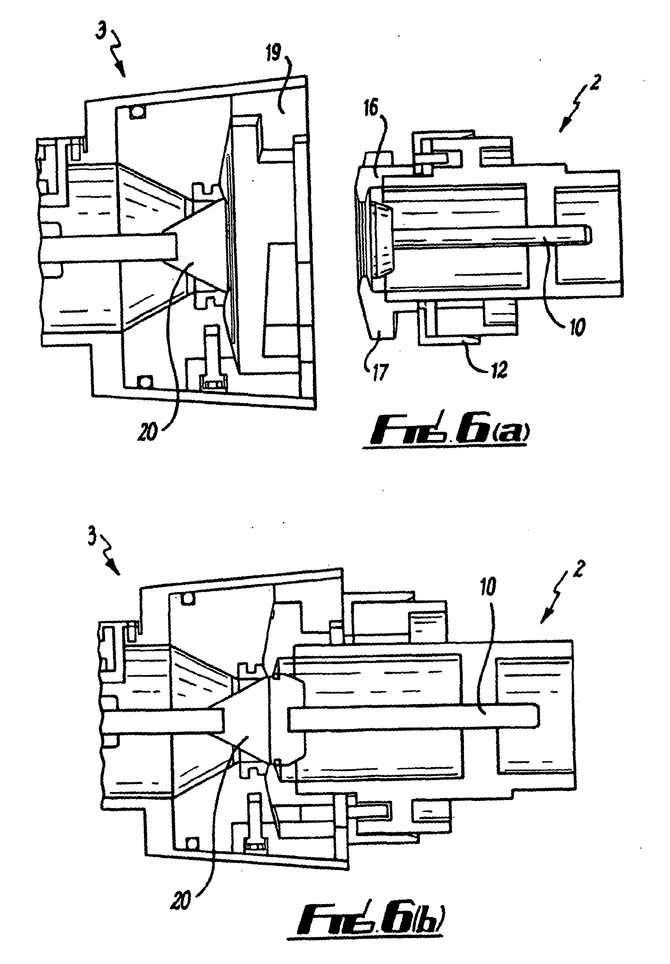

From Figure 5 it can be clearly seen that the end of the distal end of the fuel delivery hose 8 generally lies below the level of the fuel within the tank. As a direct consequence of this arrangement the previously discussed effects of foaming of the supplied diesel is significantly reduced thus allowing the correct operation of the automatic cut off mechanism 6, described now in detail with reference to Figure 6, 7 and 8.

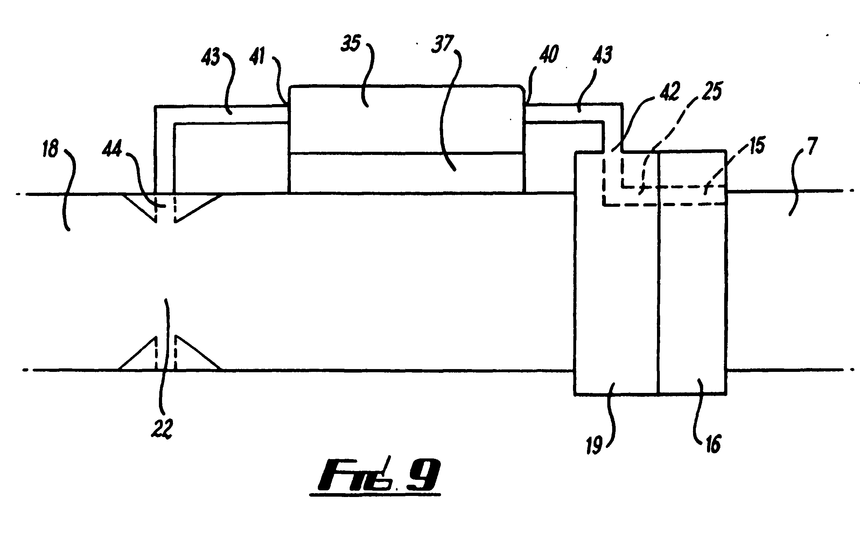

In particular, Figure 7 presents a cross sectional perspective view of the automatic cut off 6 employed within the fuel filling apparatus 1. Figure 8 presents further detail of the automatic cut off 6 in the form of a cross sectional front view of interface between the nozzle assembly 3 and the receiver assembly 2. A schematic representation of the automatic cut off 6 employed within the fuel filling apparatus 1 is then provided in Figure 9.

When the receiver assembly 2 and the nozzle assembly 3 are coupled to each other the axial vents 15 and vents 25 become aligned so as to form a plurality of passages for the air and vapour mixture to pass from the fuel tank 33 through the nozzle coupling component 19. This air flow is schematically presented in Figure 8 by the presence of the arrows. Further important features to note are the diaphragm chamber 35, defined by a vacuum cap 36 and a flexible diaphragm 37, and the latch attachment assembly 38 that physically connects diaphragm chamber 35 to the latch 23. The latch attachment assembly 38 is biased towards the bolt assembly 21 by means of a latch spring contained with a latch spring guide 39. The diaphragm chamber 35 also comprises an inlet 40 and an outlet aperture 41 in the vacuum cap 36.

It should be noted that a vent outlet 42 is connected via a hollow tube 43 to the inlet aperture 40. In a similar manner the outlet aperture 41 is connected, by a hollow tube 43, to a Venturi passage 44 associated with the second poppet valve 22. As such there is defined an isolated air passage from the fuel tank through to the second poppet valve 22 within which is located the diaphragm chamber 35.

The principle of operation of the automatic cut off 6 is as follows. When fuel is flowing through the second poppet valve 22 the reduced diameter introduced into the flow path by this element causes the velocity of the fuel flow to increase rapidly while the pressure within the fuel flow drops rapidly, an effect known as the Venturi effect. This low pressure area in the fuel flow sucks air from any source it can and so results in the air and vapour mixture being sucked from the fuel tank 33 through the isolated air passage to the second poppet valve 22. Whilst the fuel is flowing and their exists air and vapour mixture within the fuel tank 33 to provide an air flow there is no observable effect on the diaphragm chamber 35. As the air and vapour mixture is sucked up the air passage it simply passes back into the fuel flow at the second poppet valve 22.

This situation continues until the fuel level within the tank 33 rises to a point where it obstructs the flow of air and vapour mixture into the axial vents 15 within the receiver assembly 2. At this point the Venturi effect acts to suck up all the remaining air in the passage and so begins to generate a vacuum within the diaphragm chamber 35 as the fuel flow is still generating the low pressure at the second poppet valve 22.

As this vacuum grows it becomes sufficiently strong so as to result in the flexible diaphragm 37 overcoming the bias force of the latch spring and so being moved towards the vacuum cap 36. Since the latch attachment assembly 38 connects the flexible diaphragm 37 to the latch 23 the latch 23 is also forced to move towards the vacuum cap 36. The overall effect of this movement is the disengaging of the latch 23 from the bolt assembly 21. The outer bolt 27 is then forced back to its original position under the influence of the bolt assembly spring 30 so causing the second poppet valve 22 to return to the closed position.

This whole process happens almost instantaneously when the fuel level within the tank 33 obstructs the air and vapour mixture flow. It should also be noted that the inner bolt 26, and hence the first poppet valve 20, remain in an open position until the trigger 5 is returned to its original position. At this time the latch 23 returns, under the bias force of the latch spring, so as to once again engage with the inner bolt 26.

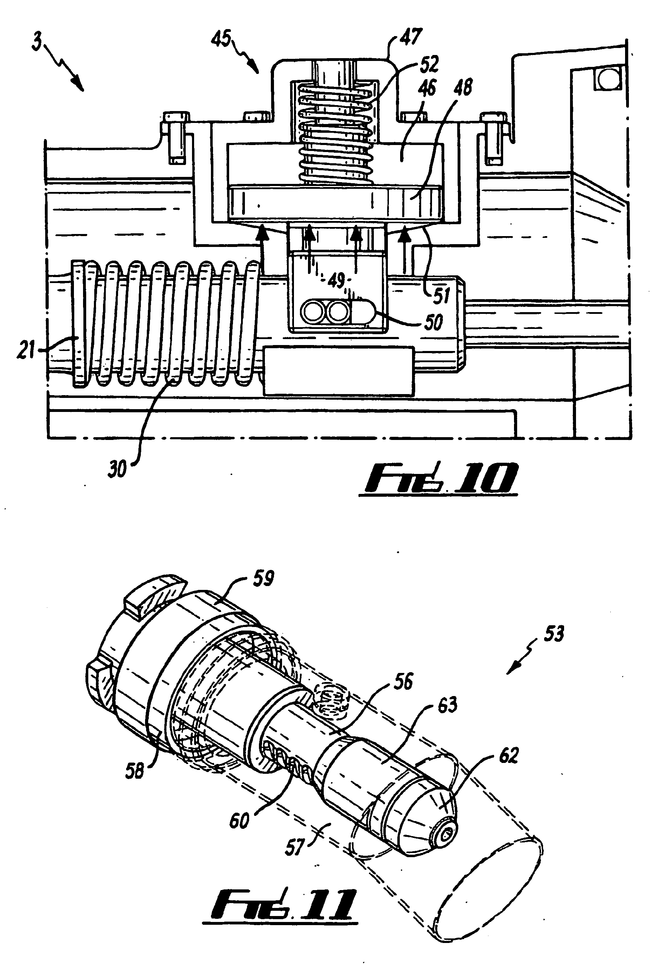

Figures 10 to 13 demonstrate an alternative fuel cut off mechanism 45 in accordance with an aspect of the present invention. Figure 10 illustrates a nozzle assembly 3 comprising the alternative cut-off mechanism 45. Similarly to the previously described nozzle assembly, the nozzle assembly 3 comprises a body with a nozzle bore extending therethrough.

Further important features to note are the cut-off chamber 46, defined by a cut-off chamber cap 47 and a cut-off disk 48, and the latch attachment assembly 49 that physically connects the cut-off disk 48 to the latch. The latch attachment assembly 49 is biased towards the bolt assembly 21 by means of a latch spring contained with a latch spring guide 50. The surface 51 of the cut-off disk 48 adjacent to the latch attachment assembly 49 is tapered so as to force the disk 48 upwards when the pressure of the fuel in the nozzle bore increases. Furthermore, the cut-off disk is biased towards the latch attachment assembly by means of a cut-off biasing spring 52. The strength of the spring 52 can be selected to allow the disk 48 to move under a predetermined threshold cut-off pressure.

The principle of operation of the alternative cut-off is as follows. When fuel is flowing through the second poppet valve 22 the pressure within the nozzle assembly 3 reaches an equilibrium dependent on the rate of flow, as long as the flow through the nozzle continues. Whilst the fuel is flowing there is no effect on the cut-off disk 48.

This situation continues until the fuel level within the tank 33 rises to a point where it obstructs the flow of fuel into the tank 33 through the receiver assembly 53 (see below). At this point the continued flow acts to increase the pressure in the nozzle bore and so begins to exert an increasing force on the surface of the cut-off disk 48.

As this pressure increases it becomes sufficiently strong so as to result in the cut-off disk 48 overcoming the bias force of the cut-off biasing spring 52 and so being moved towards the cut-off chamber cap 47. Since the latch attachment assembly 49 connects the cut-off disk 48 to the latch the latch is also forced to move towards the cut-off chamber cap. The overall effect of this movement is the disengaging of the latch from the bolt assembly 21. The outer bolt 27 is then forced back to its original position under the influence of the bolt assembly spring 30 so causing the second poppet valve 22 to return to the closed position.

This whole process happens almost instantaneously when the fuel level within the tank 33 obstructs the flow of fuel. It should also be noted that the inner bolt 26, and hence the first poppet valve 20, remain in an open position until the trigger 5 is returned to its original position. At this time the latch 23 returns, under the bias force of the latch spring, so as to once again engage with the inner bolt 26.

The alternative cut-off mechanism 45 described above may be used with a modified receiver assembly 53 that shares many common features with the previously described receiver assembly 2.

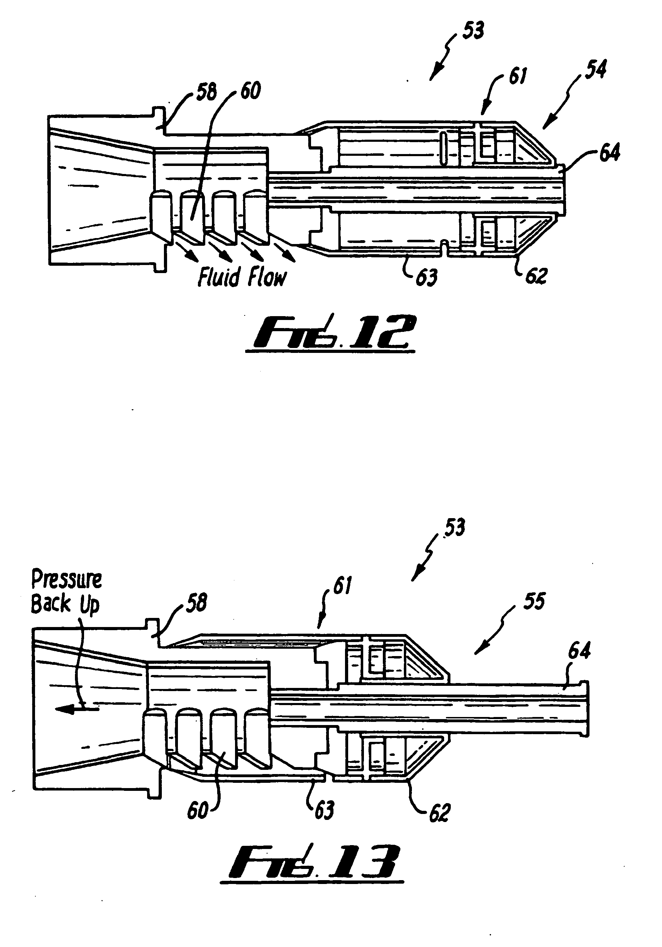

Turning now to Figure 11 further detail of a modified receiver assembly 53 can be seen, with cross-sectional views of an open 54 and closed 55 configuration presented in Figures 12 and 13 respectively. In summary, the modified receiver assembly 53 comprises the receiver assembly 2 wherein the fuel delivery hose 8 is replaced by a shut off unit 56. For clarity purposes, Figure 11 shows the shut-off unit 56 disposed within the vehicle tank filler neck 57.

On the external surface of the main body 58 of the shut-off unit 56 is provided a threaded fitting 59 that allows the receiver assembly to be fitted to a filler neck 57 of a vehicle's fuel tank 33. This is simply achieved by first removing an existing filler cap and then screwing the threaded fitting into the neck of the vehicle fuel tank. Thus, simmarly to the receiver assembly 2 described above, the receiver assembly is fitted to the vehicle's fuel tank without any requirement to modify the tank.

Also, vents and a vent cover are provided (not shown) to operate in a similar manner as to that described in relation to Figure 2 above. In the open position a plurality of radial vents provide a means for air contained within the fuel tank being filled to vent to the surroundings.

Angled slots 60 are provided on the underside of the main body 58 of the receiver assembly. Fuel enters the tank via these angled slots 60 which actively directs the flow of fuel along the lower side of the vehicle tank filler neck 57. This also improves airflow out of the tank through the vehicle tank filler neck where it can then be vented in accordance with alternative aspects of the invention. Furthermore, the directionality that the angled slots 60 imparts to the fuel flow prevents the fuel flow itself from interfering with the operational behaviour of the float and collar assembly 61 (see below).

The shut-off unit 56 is itself made possible through the employment of the float and collar assembly 61. In particular a float 62 is attached to a collar 63, which are both in turn mounted on a float guide rod 64 which guides the motion of the float 62 and collar 63 within the vehicle tank filler neck 57. The collar 63 is designed so as to close over the angled slots 60 when in a closed position 55, and to completely expose the angled slots 60 when in an open position 54 (Figure 12). The collar 63 moves between these positions under the combined influence of the float 62, which will float on the supplied fuel, and an increase in pressure produced within a discrete chamber formed between the main body 58 and the inner surface of the collar 63.

In particular, when the fuel level rises and the float 62 is displaced such that the collar 63 begins to cover the angled slots 60, a portion of the fuel flow from the angled slots 60 enters the collar 63 whose inner surfaces forms the discrete chamber with the main body of the receiver assembly. This produces an increase in the pressure within the discrete chamber such that the collar 63 rises almost instantaneously to entirely cover the angled slots 60, thus preventing further fuel flow into the tank (Figure 13).

When the collar 63 is in the closed position, fuel flow causes a pressure back up which in turn causes a pressure build up within the nozzle bore, thus activating the cut-off mechanism 45 and closing the second poppet valve 22, as described above. This stops the flow of fuel.

An advantage of the alternative cut-off mechanism 45 and modified receiver assembly 53 is that the pressure required is generated only within the float 62 and collar 63 assembly 61 and the nozzle bore, and thus the fuel tank is not subject to any undue pressure build up. When this system is in operation, it ensures that no more fuel can be put into a full tank as the collar will remain in place until the fuel level recedes and the float 62 resets under gravity.

In the above embodiment the shut-off unit 56 has been described as being attached directly to the receiver assembly. However, it will be readily apparent to those skilled in the art that in a further alternative embodiment the shut-off unit 56 can be attached directly to the nozzle assembly so that it is located within the tank filler neck 57, via the receiver assembly, when the nozzle assembly and receiver assembly are connected together. The shut-off unit 56 would then operate in a similar manner to that described above.

The above described fuel filling apparatus 11 has several advantages over those systems described in the prior art. In the first instance the receiver assembly 2 is suitable for retro fitting with presently existing fuel tank filler necks. Therefore the present system does not require any costly or time consuming modification to fuel tanks or other vehicle body work. Furthermore the retro fit process is further simplified by the use of existing screw thread fittings.

A further advantage of aspects of the present invention is that the employment of the fuel filling apparatus 1 does not produce any pressure within the fuel tank 33 during the filling process. Therefore the present apparatus reduces the potential of damage to the fuel tanks through repeated pressurisation as experienced by those systems described in the prior art.

The presently described invention also provide a simplified fluid flow path within the nozzle assembly 3, as compared with those nozzles described in the prior art. Furthermore, the incorporation of a fuel delivery hose 8 means that fuel is generally delivered below the level of fuel already present within the tank 33. This has the significant advantage that it reduces the effects of foaming of diesel fuel that is a common detrimental side effect of those systems described in the art. Reduced foaming can also be achieved by use of angled slots which direct the flow of fuel along the underside of the vehicle tank filler neck. This reduced foaming allows the incorporation of an automatic cut off system 6, 45 that is significantly more reliable than those presently described within the prior art and so removes the requirement of the "fill to spill" methods presently employed. The described apparatus therefore significantly reduces the occurrence of the spillage of fuel during the filling process and so reduces the associated environmental and financial consequences for commercial vehicle operators. With respect to the above, it has further been discovered that the venturi valve used in the previous cut off mechanism was the major factor in foaming the fuel through entraining air into the fuel as it passed through the valve. The removal of the valve has removed the high levels of foamed fuel previously seen and has resulted in more controlled fills and a more accurate cut off as the float is being acted upon by liquid fuel rather than foamed fuel.

The design of the apparatus 1 also allows for the supply of fuel at an increased fluid flow rate and so results in shorter filling times being required which has obvious benefits for commercial vehicle operators.

In addition, the fact that the receiver assembly 2 is biased to a closed position means that there is no longer a requirement for the operator of the apparatus 1 to remember to close the cap following the filling process. Importantly, this fact eliminates the risk of fuel spillage occurring when the vehicle is out on the road and so removes the opportunity for associated road accidents caused by such a spillage. Furthermore, this fact also reduces the possibility of interference or sabotage of the fuel tanks 33 by any third party inserting a foreign body.

An additional advantage relates to the fact that as the receiver assembly 53 shuts off completely when the fuel tank is full, and only allows further insertion of fuel once the fuel level has fallen again, prevents undue over-pressurisation and negates the risk of inserting more fuel into an already full tank.

The coupling components, 16 and 19, for the receiver assembly 2 and the nozzle assembly 3, respectively, provide further advantages over those systems described in the prior art. In the first instance the coupling components, 16 and 19, positively secure the nozzle assembly 3 to the receiver assembly 2. On completion of the fuel filling operation a simple rotation of the nozzle assembly 3, relative to the receiver assembly 2, is sufficient to disengage the coupling components, 16 and 19, while the vent cover springs 13 act to eject the nozzle assembly 3 from the receiver assembly 2. The overall result of this design is that the receiver assembly 2 and nozzle assembly 3 are easier to couple and decouple than those systems described in the prior art. This factor reduces the wear and tear of these components and so provides the fuel filling apparatus 1 with an increased lifetime.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. A shut-off unit (56) suitable for use with a fuel supply apparatus (1), the shut off unit (56) comprising a bore suitable for locating with a fuel supply apparatus bore (7), at least one fuel flow aperture (60) that provides a means for the fuel to exit the bore, and a float (62)
**characterised in that**
the shut-off unit (56) further comprises a collar (63) that is attached to the float (62), wherein when the float (62) is located within fuel that has exited from the bore the float (62) acts to move the collar (63) so as to block the at least one fuel flow aperture (60).

2. A shut-off unit (56) as claimed in Claim 1 wherein a chamber is formed between an inner surface of the collar (63) and the bore as the collar (63) moves to block the at least one fuel flow aperture (60).

3. A shut-off unit (56) as claimed in Claim 1 or Claim 2 wherein the at least one fuel flow aperture (60) is arranged to provide an off-axis fuel flow from the bore.

4. A shut-off unit (56) as claimed in any of the preceding claims wherein the shut off unit (56) further comprises a float guide rod (64) that connects the float (62) and the collar (63) to the bore and wherein the float guide rod (64) acts to assist the movement of the collar (63) so as to block the at least one fuel flow aperture (60).

5. A fuel filling receiver assembly (2) suitable for locating within a filler neck of a fuel tank (33) said fuel filling receiver assembly, comprising a receiver bore (7) and one or more first vents (14) located externally to the receiver bore (7), the receiver bore (7) providing a means for directing a fuel into the fuel tank (33) while the one or more first vents (14) provide an exhaust means for one or more gases located within the fuel tank (33) wherein the fuel filling receiver assembly further comprises a shut-off unit (56) as claimed in any of Claims 1 to 4.

6. A fuel filling receiver (2) as claimed in Claim 5 wherein the receiver bore (7) comprises a length greater than the filler neck of the fuel tank (33) so that turbulence experienced by the fuel entering the fuel tank (33) is reduced.

7. A fuel filling receiver (2) as claimed in Claim 5 or Claim 6 wherein the fuel filling receiver assembly (2) further comprises a vent cover (12) that moves between a first position that closes the one or more first vents (14) and a second position that opens the one or more first vents (14).

8. A fuel filling receiver (2) as claimed in Claim 7 wherein the vent cover (12) is resiliently biased to the first position by one or more bias means (13).

9. A fuel filling receiver (2) as claimed in Claim 7 or Claim 8 wherein the vent cover (12) comprises one or more second vents (15) that provide a second exhaust means for the one or more gases located within the fuel tank (33).

10. A fuel filling receiver (2) as claimed in any of Claims 5 to 9 wherein the one or more first vents (14) provide a substantially radial exhaust means for the fuel filling receiver assembly (2).

11. A fuel filling receiver (2) as claimed in Claim 9 or Claim 10 wherein the one or more second vents (15) provide a substantially axial exhaust means for the fuel filling receiver assembly (2).

12. A fuel filling receiver (2) as claimed in any of Claims 5 to 11 wherein the fuel filling receiver assembly (2) further comprises an entrance valve (10) that moves between a first position that closes one end of the receiver bore (7) and a second position that opens said end of the receiver bore (7).

13. A fuel filling receiver (2) as claimed in Claim 12 wherein the entrance valve (10) is resiliently biased to the first position by one or more bias means (11).

14. A fuel filling receiver (2) as claimed in any of Claims 5 to 13 wherein the fuel filling receiver assembly (2) further comprises a receiver coupling component (16) that provides a means for securing a fuel filling nozzle (3) assembly to the receiver assembly (2).

15. A fuel filling receiver (2) as claimed in Claim 14 wherein the receiver coupling component (16) comprises one or more radially extending protrusions (17) located on the external surface of the receiver bore (7).

16. A fuel filling receiver (2) as claimed in any of Claims 5 to 15 wherein the fuel filling receiver assembly (2) further comprises an attachment means (59) for securing the receiver assembly (2) to the filler neck of the fuel tank (33).

17. A fuel filling receiver (2) as claimed in Claim 16 wherein the attachment means for securing the receiver assembly (2) comprises a thread fitting.

## Patentansprüche

1. Eine Absperreinheit (56), die zur Verwendung mit einer Kraftstoffzufuhrvorrichtung (1) geeignet ist, wobei die Absperreinheit (56) eine Bohrung, die zum Lokalisieren in einer Bohrung (7) einer Kraftstoffversorgungsvorrichtung geeignet ist, mindestens eine Kraftstoffflussöffnung (60), die ein Mittel für das Austreten des Kraftstoffs aus der Bohrung bereitstellt, und einen Schwimmer (62) beinhaltet,
**dadurch gekennzeichnet, dass**
die Absperreinheit (56) ferner einen Kragen (63) beinhaltet, der an dem Schwimmer (62) angebracht ist, wobei der Schwimmer (62), wenn der Schwimmer (62) innerhalb des Kraftstoffs, der aus der Bohrung ausgetreten ist, lokalisiert ist, dazu dient, um den Kragen (63) zu bewegen, um die mindestens eine Kraftstoffflussöffnung (60) zu blockieren.

2. Absperreinheit (56) gemäß Anspruch 1, wobei zwischen einer inneren Oberfläche des Kragens (63) und der Bohrung eine Kammer gebildet wird, wenn sich der Kragen (63) bewegt, um die mindestens eine Kraftstoffflussöffnung (60) zu blockieren.

3. Absperreinheit (56) gemäß Anspruch 1 oder Anspruch 2, wobei die mindestens eine Kraftstoffflussöffnung (60) angeordnet ist, um einen von der Achse versetzten Kraftstofffluss aus der Bohrung bereitzustellen.

4. Absperreinheit (56) gemäß einem der vorhergehenden Ansprüche, wobei die Absperreinheit (56) ferner eine Schwimmerführungsstange (64) beinhaltet, die den
Schwimmer (62) und den Kragen (63) mit der Bohrung verbindet, und wobei die Schwimmerführungsstange (64) dazu dient, die Bewegung des Kragens (63) zu unterstützen, um die mindestens eine Kraftstoffflussöffnung (60) zu blockieren.

5. Eine Kraftstoffeinfüllungsaufnahmeanordnung (2), die zum Lokalisieren innerhalb eines Einfüllstutzens eines Kraftstofftanks (33) geeignet ist, wobei die Kraftstoffeinfüllungsaufnahmeanordnung eine Aufnahmebohrung (7) und einen oder mehrere erste Schlitze (14), die außerhalb der Aufnahmebohrung (7) lokalisiert sind, beinhaltet, wobei die Aufnahmebohrung (7) ein Mittel zum Leiten eines Kraftstoffs in den Kraftstofftank (33) bereitstellt, während der eine oder die mehreren ersten Schlitze (14) ein Ausgangsmittel für ein oder mehrere Gase, die innerhalb des Kraftstofftanks (33) lokalisiert sind, bereitstellen, wobei die Kraftstoffeinfüllungsaufnahmeanordnung ferner eine Absperreinheit (56) gemäß einem der Ansprüche 1 bis 4 beinhaltet.

6. Kraftstoffeinfüllungsaufnahme (2) gemäß Anspruch 5, wobei die Aufnahmebohrung (7) eine Länge beinhaltet, die größer ist als der Einfüllstutzen des Kraftstofftanks (33), so dass Verwirbelungen, die der Kraftstoff, der in den Kraftstofftank (33) eintritt, erfährt, reduziert werden.

7. Kraftstoffeinfüllungsaufnahme (2) gemäß Anspruch 5 oder Anspruch 6, wobei die Kraftstoffeinfüllungsaufnahmeanordnung (2) ferner eine Schlitzabdeckung (12) beinhaltet, die sich zwischen einer ersten Position, in der der eine oder die mehreren ersten Schlitze (14) geschlossen werden, und einer zweiten Position, in der der eine oder die mehreren ersten Schlitze (14) geöffnet werden, bewegt.

8. Kraftstoffeinfüllungsaufnahme (2) gemäß Anspruch 7, wobei die Schlitzabdeckung (12) mittels eines oder mehrerer Vorspannmittel (13) zu der ersten Position elastisch vorgespannt ist.

9. Kraftstoffeinfüllungsaufnahme (2) gemäß Anspruch 7 oder Anspruch 8, wobei die Schlitzabdeckung (12) einen oder mehrere zweite Schlitz (15) beinhaltet, die ein zweites Ausgangsmittel für das eine oder die mehreren Gase, die innerhalb des Kraftstofftanks (33) lokalisiert sind, bereitstellen.

10. Kraftstoffeinfüllungsaufnahme (2) gemäß einem der Ansprüche 5 bis 9, wobei der eine oder die mehreren ersten Schlitze (14) ein im Wesentlichen radiales Ausgangsmittel für die Kraftstoffeinfüllungsaufnahmeanordnung (2) bereitstellen.

11. Kraftstoffeinfüllungsaufnahme (2) gemäß Anspruch 9 oder Anspruch 10, wobei der eine oder die mehreren zweiten Schlitze (15) ein im Wesentlichen axiales Ausgangsmittel für die Kraftstoffeinfüllungsaufnahmeanordnung (2) bereitstellen.

12. Kraftstoffeinfüllungsaufnahme (2) gemäß einem der Ansprüche 5 bis 11, wobei die Kraftstoffeinfüllungsaufnahmeanordnung (2) ferner ein Eintrittsventil (10) beinhaltet, das sich zwischen einer ersten Position, in der ein Ende der Aufnahmebohrung (7) geschlossen wird, und einer zweiten Position, in der das Ende der Aufnahmebohrung (7) geöffnet wird, bewegt.

13. Kraftstoffeinfüllungsaufnahme (2) gemäß Anspruch 12, wobei das Eintrittsventil (10) mittels eines oder mehrerer Vorspannmittel (11) zu der ersten Position elastisch vorgespannt ist.

14. Kraftstoffeinfüllungsaufnahme (2) gemäß einem der Ansprüche 5 bis 13, wobei die Kraftstoffeinfüllungsaufnahmeanordnung (2) ferner eine Aufnahmekopplungskomponente (16) beinhaltet, die ein Mittel zum Sichern einer Kraftstoffeinfüllungsdüsenanordnung (3) an der Aufnahmeanordnung (2) bereitstellt.

15. Kraftstoffeinfüllungsaufnahme (2) gemäß Anspruch 14, wobei die Aufnahmekopplungskomponente (16) einen oder mehrere sich radial erstreckende Vorsprünge (17) beinhaltet, die an der externen Oberfläche der Aufnahmebohrung (7) lokalisiert sind.

16. Kraftstoffeinfüllungsaufnahme (2) gemäß einem der Ansprüche 5 bis 15, wobei die Kraftstoffeinfüllungsaufnahmeanordnung (2) ferner ein Anbringungsmittel (59) zum Sichern der Aufnahmeanordnung (2) an dem Einfüllstutzen des Kraftstofftanks (33) beinhaltet.

17. Kraftstoffeinfüllungsaufnahme (2) gemäß Anspruch 16, wobei das Anbringungsmittel zum Sichern der Aufnahmeanordnung (2) ein Gewindeanschlussstück beinhaltet.

## Revendications

1. Une unité de fermeture (56) appropriée à l'utilisation avec un appareil d'alimentation en carburant (1), l'unité de fermeture (56) comprenant un alésage approprié pour se placer avec un alésage d'appareil d'alimentation en carburant (7), au moins une ouverture d'écoulement de carburant (60) qui fournit un moyen pour que le carburant sorte de l'alésage, et un flotteur (62)
**caractérisée en ce que**
l'unité de fermeture (56) comprend de plus un collier (63) qui est fixé au flotteur (62) où, lorsque le flotteur (62) est placé dans du carburant qui est sorti de l'alésage, le flotteur (62) a pour effet de déplacer le collier (63) de façon à bloquer cette au moins une ouverture d'écoulement de carburant (60).

2. Une unité de fermeture (56) telle que revendiquée dans la revendication 1 où une chambre est formée entre une surface intérieure du collier (63) et l'alésage quand le collier (63) se déplace pour bloquer cette au moins une ouverture d'écoulement de carburant (60).

3. Une unité de fermeture (56) telle que revendiquée dans la revendication 1 ou la revendication 2 où cette au moins une ouverture d'écoulement de carburant (60) est arrangée afin de fournir un écoulement de carburant désaxé depuis l'alésage.

4. Une unité de fermeture (56) telle que revendiquée dans n'importe lesquelles des revendications précédentes où l'unité de fermeture (56) comprend de plus une tige de guidage de flotteur (64) qui raccorde le flotteur (62) et le collier (63) à l'alésage et où la tige de guidage de flotteur (64) a pour effet d'assister le déplacement du collier (63) de manière à bloquer cette au moins une ouverture d'écoulement de carburant (60).

5. Un assemblage de récepteur de remplissage de carburant (2) approprié pour se placer dans un col de remplissage d'un réservoir de carburant (33), ledit assemblage de récepteur de remplissage de carburant comprenant un alésage de récepteur (7) et un ou plusieurs premiers évents (14) placés de façon externe à l'alésage de récepteur (7), l'alésage de récepteur (7) fournissant un moyen pour diriger un carburant dans le réservoir de carburant (33) pendant que ces un ou plusieurs premiers évents (14) fournissent un moyen d'échappement pour un ou plusieurs gaz placés à l'intérieur du réservoir de carburant (33) où l'assemblage de récepteur de remplissage de carburant comprend de plus une unité de fermeture (56) telle que revendiquée dans n'importe lesquelles des revendications 1 à 4.

6. Un récepteur de remplissage de carburant (2) tel que revendiqué dans la revendication 5 où l'alésage de récepteur (7) comprend une longueur supérieure au col de remplissage du réservoir de carburant (33) de sorte à réduire la turbulence à laquelle doit faire face le carburant qui pénètre dans le réservoir de carburant (33).

7. Un récepteur de remplissage de carburant (2) tel que revendiqué dans la revendication 5 ou la revendication 6 où l'assemblage de récepteur de remplissage de carburant (2) comprend de plus un couvercle d'évent (12) qui se déplace entre une première position qui ferme ces un ou plusieurs premiers évents (14) et une deuxième position qui ouvre ces un ou plusieurs premiers évents (14).

8. Un récepteur de remplissage de carburant (2) tel que revendiqué dans la revendication 7 où le couvercle d'évent (12) est décalé de façon résiliente jusqu'à la première position par un ou plusieurs moyens de décalage (13).

9. Un récepteur de remplissage de carburant (2) tel que revendiqué dans la revendication 7 ou la revendication 8 où le couvercle d'évent (12) comprend un ou plusieurs deuxièmes évents (15) qui fournissent un deuxième moyen d'échappement pour ces un ou plusieurs gaz placés à l'intérieur du réservoir de carburant (33).

10. Un récepteur de remplissage de carburant (2) tel que revendiqué dans n'importe lesquelles des revendications 5 à 9 où ces un ou plusieurs premiers évents (14) fournissent un moyen d'échappement substantiellement radial pour l'assemblage de récepteur de remplissage de carburant (2).

11. Un récepteur de remplissage de carburant (2) tel que revendiqué dans la revendication 9 ou la revendication 10 où ces un ou plusieurs deuxièmes évents (15) fournissent un moyen d'échappement substantiellement axial pour l'assemblage de récepteur de remplissage de carburant (2).

12. Un récepteur de remplissage de carburant (2) tel que revendiqué dans n'importe lesquelles des revendications 5 à 11 où l'assemblage de récepteur de remplissage de carburant (2) comprend de plus une soupape d'entrée (10) qui se déplace entre une première position qui ferme une extrémité de l'alésage de récepteur (7) et une deuxième position qui ouvre ladite extrémité de l'alésage de récepteur (7).

13. Un récepteur de remplissage de carburant (2) tel que revendiqué dans la revendication 12 où la soupape d'entrée (10) est décalée de façon résiliente jusqu'à la première position par un ou plusieurs moyens de décalage (11).

14. Un récepteur de remplissage de carburant (2) tel que revendiqué dans n'importe lesquelles des revendications 5 à 13 où l'assemblage de récepteur de remplissage de carburant (2) comprend de plus un composant d'accouplement de récepteur (16) qui fournit un moyen pour assujettir un assemblage de buse de remplissage de carburant (3) à l'assemblage de récepteur (2).

15. Un récepteur de remplissage de carburant (2) tel que revendiqué dans la revendication 14 où le composant d'accouplement de récepteur (16) comprend une ou plusieurs saillies s'étendant de façon radiale (17) placées sur la surface externe de l'alésage de récepteur (7).

16. Un récepteur de remplissage de carburant (2) tel que revendiqué dans n'importe lesquelles des revendications 5 à 15 où l'assemblage de récepteur de remplissage de carburant (2) comprend de plus un moyen de fixation (59) pour assujettir l'assemblage de récepteur (2) au col de remplissage du réservoir de carburant (33).

17. Un récepteur de remplissage de carburant (2) tel que revendiqué dans la revendication 16 où le moyen de fixation destiné à assujettir l'assemblage de récepteur (2) comprend un raccord à filetage.
